# EUROPEAN PATENT SPECIFICATION

(11) **EP 4 251 359 B1**
(45) Date of publication and mention of the grant of the patent: **15.10.2025**
(21) Application number: 21831157.9
(22) Date of filing: 24.11.2021
(51) Int. Cl.: B23K 9/095, B23K 9/167, B23K 9/173, B23K 9/29, B23K 9/32, H01R 39/64

(54) **TRIGGER MECHANISM WITH ROTATING POWER CONNECTOR FOR A SEMI AUTOMATIC WELDING TORCH**
AUSLÖSEMECHANISMUS MIT DREHBAREM LEISTUNGSANSCHLUSS FÜR EINEN HALBAUTOMATISCHEN SCHWEISSBRENNER
MÉCANISME DE DÉCLENCHEMENT AVEC CONNECTEUR D'ALIMENTATION ROTATIF POUR TORCHE DE SOUDAGE SEMI-AUTOMATIQUE

(30) Priority: 30.11.2020 US 202063119176 P; 18.11.2021 US 202117529590
(43) Date of publication of application: 04.10.2023
(73) Proprietor: Illinois Tool Works, Inc., Glenview, Illinois 60025 (US)
(72) Inventor: BATZLER, Todd, G., Glenview, Illinois 60025 (US); ROMENESKO, Charles, J., Glenview, Illinois 60025 (US)
(74) Representative: HGF
(86) International application number: PCT/US2021/060805
(87) International publication number: WO 2022/115592

(56) References cited:
- CN-U- 207 265 380
- DE-A1- 4 325 289
- US-A1- 2014 166 629
- US-B1- 7 854 615

## Description

This application hereby claims priority to and the benefit of U.S. Provisional Application Ser. No. 63/119,176, entitled "Semi-Automatic Torch Trigger For Rotating Power Connector For Welding Torch Cables," filed November 30, 2020 and U.S. Patent Application No. 17/529,590, filed on November 18, 2021, entitled "Semi-Automatic Torch Trigger For Rotating Power Connector For Welding Torch Cables."

### BACKGROUND

The present invention relates to a trigger mechanism for a semi-automatic welding torch, see claim 1.
In an electric arc welding process, it is known to use a power cable for conducting current, shielding gas, and electrode wire through a welding torch. The power cable may be referred to as a unicable, which may include a core tube, copper cabling, lead wires, and insulation jacket. Typically, one end of the cable is fastened to a wire feeder by way of a mating pin (or power pin), and the other end is fastened to a torch body with a gooseneck or conductor tube of the welding torch. These connections are fixed and unmoving.

The power cable provides major flexibility to the torch, such that the welding arc can be applied at various locations. However, conventional fixed connections limit the torsional movement of the copper bundles within the unicables and creates stress concentration, leading to eventual failure of the electrical connection of the welding torch. Conventional cables are installed in fixed positions, and during manipulation of the torch by a user or a robot, the cable twists as the torch is turned. In some designs, this is problematic as the cable can be subjected to severe mechanical wear (e.g., excessive twisting, deformation, breaking of wires) such that the fixed cable connections fail. In the case of a coaxial mounted welding torch, any rotation of the cable puts rotational torque on the cable. When the cable is twisted, such as at a bended contour, the twist strain / stress concentrates at one end, and causes mechanical failure of the cable. US7854615 describes a rotational connector for connecting a welding power cable to a welding torch may include an enclosure, an end cap, a torch stud, a cable stud, and a biasing member.

### SUMMARY

According to a first aspect of the invention, a trigger mechanism for a semi-automatic welding torch is defined in claim 1. The trigger mechanism is configured to transmit control signals through a transmission channel that is not subject to mechanical wear from rotational movement of the rotating power connector. Further preferred embodiment of the present invention are defined in the dependent claims.

These and other features and advantages of the invention will be more fully understood from the following detailed description of the invention taken together with the accompanying drawings.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example trigger mechanism and transmission channel, in accordance with aspects of this disclosure.
FIG. 2 illustrates another example trigger mechanism and transmission channel employing a wireless transceiver, in accordance with aspects of this disclosure.
FIG. 3 illustrates another example trigger mechanism and transmission channel employing a conductive brush, in accordance with aspects of this disclosure.
FIG. 3A illustrates another example trigger mechanism and transmission channel employing a conductive brush, in accordance with aspects of this disclosure.
FIG. 4 illustrates another example trigger mechanism and transmission channel employing one or more of an inductive or a capacitive element, in accordance with aspects of this disclosure.
FIG. 5 illustrates another example trigger mechanism and transmission channel employing an optical emitter and an optical detector, in accordance with aspects of this disclosure.
FIG. 6 illustrates another example trigger mechanism and transmission channel employing a mechanical switching mechanism, in accordance with aspects of this disclosure.
FIG. 7 illustrates another example trigger mechanism and transmission channel employing a mechanical limiter, in accordance with aspects of this disclosure.

The figures are not necessarily to scale. Where appropriate, similar or identical reference numbers are used to refer to similar or identical components.

### DETAILED DESCRIPTION

This disclosure relates to electric welding generally, and more particularly to a trigger mechanism for a semi-automatic torch trigger for a rotating power connector in use in welding torch cables. In particular, the trigger mechanism is configured to transmit control signals through a transmission channel that is not subject to mechanical wear from rotational movement of the rotating power connector.

The present disclosure advantageously allows for reliable communication between a welding torch trigger and a welding power supply without breaking electrical contact or putting unnecessary strain on the welding cable, even as the welding torch rotates relative to the welding torch cable. In particular, semi-automatic torches are designed for at least partial rotation relative to a connected welding cable. As the semi-automatic torch rotates, the disclosed systems and methods provide an uninterrupted transmission channel (e.g., distinct from yet operating in conjunction with a rotating power connector) through which a trigger control signal travels to a control circuitry (e.g., at a welding power supply). Accordingly, any torque or mechanical wear on conductors between the trigger and the control circuitry is reduced.

A "Rotating Power Connector" (RPC) are often employed in automated torch welding applications, such as robotic welding. For example, a rotating power connector creates an interface between a stationary reference frame and a rotating reference frame. A welding torch, including a torch handle (with the trigger mechanism and contact tip) may occupy a rotating reference frame, whereas the welding cable or conduit leading back to the wire feeder may occupy a stationary reference frame. However, either the torch handle or the welding cable may be configured to rotate or be stationary, provided the two reference frames are allowed to rotate relative to the other.

Automated applications employing a rotating power connector neither support nor require a trigger mechanism as to provide a control signal to initiate the weld, as such a control signal is provided from a control circuit or processor. However, a semi-automatic, hand-held torch employs a manually or automatically actuated trigger. In some examples, the trigger is activated by an operator and is therefore located within the torch handle. In welding torches that do not employ a rotating power connector, the trigger signal is transmitted to the wire feeder and/or welding power supply by one or more conductors or wires via a conventional switch. The wires run through the welding cable or conduit from the torch handle to the welding system. However, use of an RPC creates a condition where, after a certain number of rotations, the wires connecting the trigger switch and the welding system would be twisted to the point of damage, rendering the torch and connectors inoperable.

Moreover, the joints of a human welder (e.g., shoulder, elbow, wrist, etc.) are more constrained than a robotic arm. The forces acting on the torch are transferred to the human welder and must be opposed by the welder in order to manipulate the torch at or near the welding joint. Advantageously, the present disclose provide systems and methods that serve to reduce or eliminate these forces against the welder, thereby reducing operator fatigue and/or long-term repetitive motion injury, as well as alleviating mechanical connection failure in a semi-automatic (e.g., robotic, cobotic, etc.) application.

As disclosed herein, the trigger mechanism and transmission channel advantageously provide stable electrical contact between the weld trigger and the welding system control circuitry, while the rotating power connector rotates, thereby relieving strain on conductors between the trigger and control circuitry. This can include, additionally or alternatively, to magnetic (e.g., inductive) and/or electric (e.g., capacitive) couplings, for example.

In disclosed examples, a trigger mechanism for a semi-automatic welding torch having a rotating power connector, the trigger mechanism comprising a trigger arranged at a first location of a torch body and configured to generate a trigger command signal in response to pressing the trigger; control circuitry to receive the trigger command signal; and a transmission channel to transmit the trigger command signal from the trigger across and/or in parallel with the rotating power connector and to the control circuitry.

In some examples, a trigger connector electrically couples the trigger with the transmission channel, the trigger connector including a first set of conductive brushes configured to receive the trigger command signal from the trigger. In some examples, a first wireless transceiver to transmit the trigger command signal wirelessly via the transmission channel. In examples, the trigger, the rotating power connector, and the first wireless transceiver are housed in a handle of the welding torch.

In some examples, a second wireless transceiver to receive the trigger command signal from the first wireless transceiver and transmit the trigger command signal to the control circuitry. In examples, the control circuitry or the second transceiver are arranged at a portion of the welding torch opposite the rotating power connector.

In some examples, the control circuitry or the second transceiver are arranged at a welding power supply. In examples, a first energy storage device coupled to the first wireless transceiver, and a second energy storage device coupled to the second wireless transceiver.

In some examples, a first set of conductive brushes configured to receive the trigger command signal, the first set of conductive brushes coupled to the transmission channel to transmit the trigger command signal to a second set of conductive brushes arranged opposite the rotating power connector.

In some examples, the first set of conductive brushes and the second set of conductive brushes are electrically isolated from the rotating power connector. In examples, one or more springs to bias the first set of conductive brushes or the second set of conductive brushes to maintain electrical contact with the transmission channel. In examples, the transmission channel is an electrically conductive conduit.

In some examples, a transceiver coupled to the second set of conductive brushes, the transceiver configured to transmit the trigger command signal to the control circuitry. In examples, an exciter circuit to generate a magnetic field in response to the trigger command signal. In examples, a sensing circuit to measure a change in the magnetic field in response to the trigger command signal, wherein the sensing circuit is coupled to the control circuitry.

In some examples, an exciter circuit to generate an electric field through the transmission channel in response to the trigger command signal. In examples, a sensing circuit to measure a change in the electric field in response to the trigger command signal, wherein the sensing circuit coupled to the control circuitry.

In some examples, a mechanical actuator configured to contact a switch arranged on a side of the rotating power connector opposite the trigger in response to the trigger command signal. In examples, the transmission channel comprises an opening through the rotating power connector, the mechanical actuator to drive a rod through the opening to contact the switch. In examples, the mechanical actuator is spring activated in response to the trigger command signal and configured to cause at least a portion of the rod to extend through the side of the opening opposite the trigger to contact the switch.

In some examples, the switch is connected to the control circuitry, indicating activation of the trigger. In examples, the transmission channel is coaxial with the rotating power connector. In examples, a mechanical limiter to limit rotation of the rotating power connector to a range of radial angles. In some examples, a bumper to limit a number of revolutions of the rotating power connector to a range of radial angles.

In examples, a driver circuit to generate and transmit an optical signal via an optically conductive ring in the transmission channel in response to the trigger command signal. In examples, a detector circuit coupled to the optically conductive ring, wherein the detector circuit is coupled to the control circuitry.

In disclosed examples, a trigger mechanism for a semi-automatic welding torch having a rotating power connector includes a transmission channel extending through at least part of the rotating power connector: an exciter circuit configured to generate a current through and apply it to the transmission channel; and a trigger actuator within a trigger on a torch body arranged at a first end of the rotation power connector, the trigger actuator configured to electrically connect to the transmission channel in response to pressing the trigger thereby generating a trigger command signal.

In some examples, the exciter circuit is arranged on a second side of the rotating power connector opposite the trigger actuator. In examples, the transmission channel comprises an inductive coupling configured to modify a magnetic field in response to pressing the trigger.

In some examples, a sensing circuit to measure a change in the magnetic field in response to pressing the trigger, wherein the sensing circuit is coupled to control circuitry to control a welding process. In examples, the transmission channel comprises a capacitive coupling configured to modify an electric field in response to pressing the trigger.

In some examples, a sensing circuit to measure a change in the electric field in response to the trigger command signal, wherein the sensing circuit is coupled to control circuitry to control a welding process. In examples, the semi-automatic welding torch is manually operated.

In some examples, the semi-automatic welding torch is operated robotically. In some examples, a trigger mechanism for a semi-automatic welding torch having a rotating power connector includes a trigger arranged at a rotating frame of a torch body, the trigger configured to transmit a trigger command signal in response to pressing the trigger; control circuitry arranged at a stationary frame relative to the rotating frame, the control circuitry to receive the trigger command signal; a transmission channel to transmit the trigger command signal from the trigger in parallel with the rotating power connector and to the control circuitry; and a conductive element to electrically couple the transmission channel to the control circuitry.

As used herein, the terms "first" and "second" may be used to enumerate different components or elements of the same type, and do not necessarily imply any particular order.

The term "welding-type system," as used herein, includes any device capable of supplying power suitable for welding, plasma cutting, induction heating, Carbon Arc Cutting-Air (e.g., CAC-A), and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

As used herein, the term "welding program" or "weld program" includes at least a set of welding parameters for controlling a weld. A welding program may further include other software, algorithms, processes, or other logic to control one or more welding-type devices to perform a weld.

The term "power" is used throughout this specification for convenience, but also includes related measures such as energy, current, voltage, resistance, conductance, and enthalpy. For example, controlling "power" may involve controlling voltage, current, energy, resistance, conductance, and/or enthalpy, and/or controlling based on "power" may involve controlling based on voltage, current, energy, resistance, conductance, and/or enthalpy.

As used herein, a welding power supply, a welding-type power supply and/or power source refers to any device capable of, when power is applied thereto, supplying welding, cladding, brazing, plasma cutting, induction heating, laser (including laser welding, laser hybrid, and laser cladding), carbon arc cutting or gouging, and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

As used herein, "power conversion circuitry" and/or "power conversion circuits" refer to circuitry and/or electrical components that convert electrical power from one or more first forms (e.g., power output by a generator) to one or more second forms having any combination of voltage, current, frequency, and/or response characteristics. The power conversion circuitry may include safety circuitry, output selection circuitry, measurement and/or control circuitry, and/or any other circuits to provide appropriate features.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to any analog and/or digital components, power and/or control elements, such as a microprocessor, digital signal processor (DSP), software, and the like, discrete and/or integrated components, or portions and/or combinations thereof, including physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

The terms "control circuit," "control circuitry," and/or "controller," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards that form part or all of a controller, and are used to control a welding process, a device such as a power source or wire feeder, and/or any other type of welding-related system.

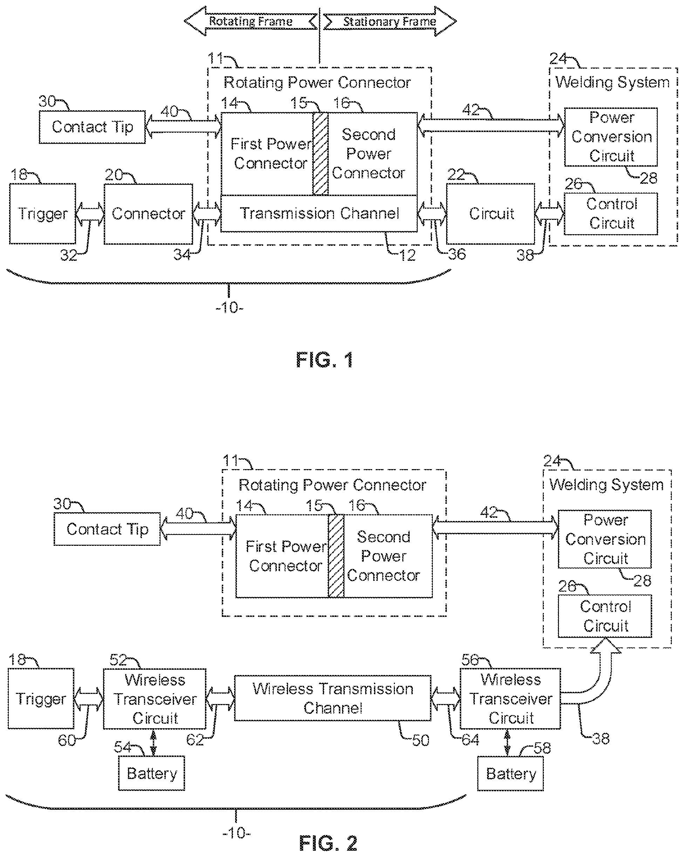

Turning now to the figures, FIG. 1 provides a block diagram of an example trigger mechanism 10 having a rotating power connector 11. As disclosed herein, the trigger mechanism 10 and/or the rotating power connector 11 are partially or completely contained within a torch body or housing of an electric welding torch (e.g., a gas metal arc welding (GMAW) torch, a metal inert gas (MIG) torch, etc.). The torch may be connected to one or more welding systems 24 (e.g., a welding power supply, a wire feeder, etc.) via one or more weld cables 42, such as an unicable assembly, and/or cabling 36 and 38.

Although illustrated with reference to welding power, other consumables may be channeled through the weld cables 36, 38 and 42, such as shielding gas, data signals, a consumable electrode (e.g., a welding wire), for example, to output a welding arc at a contact tip 30. In some examples, a single weld cable may incorporate one or more of the physical or functional features represented by weld cables 36, 38 and 42.

In some examples, the rotating power connector 11 is arranged within the housing or handle of the welding torch, providing a conducting assembly for the provision of welding power from the welding system 24 (e.g., via power conversion circuitry 28) and the contact tip 30, such as via one or more channels, cables, or conduits 40.

In operation, the rotating power connector 11 allows for continuous and efficient passage of one or more of electrical current, welding wire, data, and/or shielding gas from the welding system(s) 24. For example, a first power connector 14 is connected to a second power connector 16 (e.g., directly and/or via an interface 15). In a non-limiting example, the first power connector 14 occupies a rotating frame relative to a stationary frame that includes the second power connector 16. In some examples, the rotating and stationary frames are reversed. The rotatable movement of the rotating power connector 11 provides relief to the otherwise rigid connection through the welding torch, significantly reducing the amount of stress on the weld cable 42, extending the useful life of the weld cable 42 and associated connectors, which may fail under cyclical or repetitive torsion movements. The rotating movement can be a feature for some welding tools and/or processes (e.g., a MIG welding process, etc.).

To ensure reliable and efficient communication of a trigger command signal from the trigger 18 (e.g., in response to a trigger pull), the transmission channel 12 is arranged within, about, around, or through the rotating power connector 11, to allow for the trigger command signals to travel to a control circuit 26 of the welding system 24. For example, the trigger 18 may transmit a signal (e.g., physical or electric) through a cable, conduit, interface, or medium 32 to a connector 20 coupled to the transmission channel 12 (e.g., via cable, conduit, interface, medium, circuit, or signal 34, as a list of non-limiting examples). The signal from the trigger 18 is transmitted through the transmission channel 12 (e.g., from the rotating frame to the stationary frame) to a circuit 22 (e.g., which may include a multi-pin connector) via an interface 36 (e.g., housed within the torch handle, in the cable 38, in a remote system, at the welding system 24, etc.), and then transmitted to the control circuit 26 via cable 38. In this manner, regardless of the relative rotational movement between the stationary and rotating frames, trigger command signals (e.g., to initiate and/or adjust a welding process) are reliably and efficiently transmitted to the control circuit 26 to control the welding system 24 to perform the welding process.

In some examples, the trigger 18 may include a power source and/or circuit(s) to generate and/or transmit the trigger signal to the control circuit 26 in response to a trigger pull. In some examples, pressing the trigger 18 serves to close a circuit through which a current has been applied, which can be sensed by one or more sensor circuits (e.g., within and/or associated with the welding system 24 and/or control circuit 26).

In some examples, a torch that includes a trigger mechanism 10 and rotating power connector 11 is configured to connect to a conventional welding cable and/or control a conventional welding system, such that no additional circuitry, couplings, interfaces, or power, as a list of non-limiting examples, is required to replace a conventional torch with a torch including the disclosed trigger mechanism(s).

FIG. 2 illustrates another example trigger mechanism 10 configured for wireless signal transmission. As shown, trigger 18 is connected to a wireless transceiver circuit 52 via a cable, conduit, interface, or medium 60. Upon actuation of the trigger 18, the wireless transceiver circuit 52 transmits a signal via the wireless transmission channel 50 via cables, conduits, interfaces, or media 62 and 64 to a wireless transceiver circuit 56. The wireless transceiver circuit 56 can provide the trigger command signal to the control circuit 26 via cable, conduit, interface, or medium 38. In some examples, the wireless transceiver circuit 56 is arranged in the torch handle, and the trigger actuation signal is transmitted to the control circuit 26 via a cable.

In some examples, the wireless transceiver circuit 56 is arranged at the welding system 24. In some examples, the wireless transceiver circuit 56 is located in a remote control device, in communication with both the wireless transceiver circuit 52 (via wireless transmission channel 50) and the control circuit 26. In some examples, wireless transceiver circuit 52 and wireless transceiver circuit 56 are powered by one or more batteries 54 and 58, such that trigger command signals are generated, transmitted, and/or received without requiring power from another source (e.g., the welding system 24).

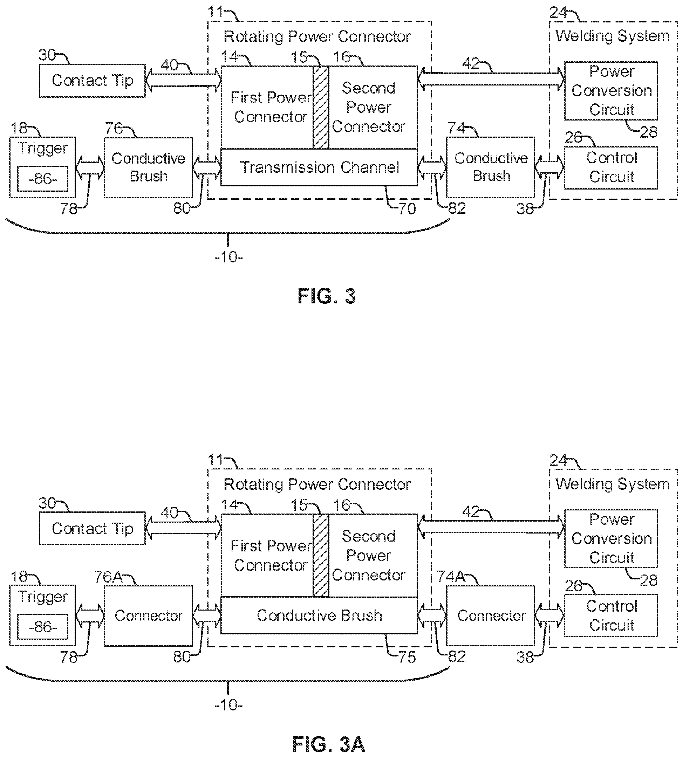

FIG. 3 illustrates another example trigger mechanism 10 and transmission channel 70 employing one or more conductive elements, such as conductive brushes 74 and 76. In the example of FIG. 3, transmission channel 70 is a conductive pathway between conductive brushes 74 and 76. For instance, the transmission channel 70 may be one or more layers of a conductive material (e.g., a metal, a semiconductor, etc.) arranged partially or completely about the first and second power connectors 14 and 16, and the interface 15 of the rotating power conductor 11. In additional or alternative examples, the transmission channel 70 is arranged within a core of the rotating power connector 11.

In some examples, the transmission channel 70 is configured to rotate relative to the stationary frame. However, contact between the transmission channel 70 and the conductive brushes 74 and 76 is maintained (e.g., via optional cables, conduits, interfaces, or media 78, 80 and 82) by biasing the conductive brushes 74 and 76 against the transmission channel 70 during rotational movement of the rotating power connector 11.

In some examples, the trigger 18 includes a mechanical or electrical switch, spring, or other actuator 86, which generates a signal to be transmitted through the transmission channel 70 via conductive brushes 74 and 76. In some examples, the actuator 86 creates a mechanical force to bias the conductive brush 76 to contact the transmission channel 70 thereby creating a current pathway for the trigger command signal. In some examples, the actuator 86 includes or is linked to circuitry configured to generate and transmit the trigger command signal for transmission to the control circuit 26. In some examples, one or both of the one or more conductive elements is a conductor ring. For instance, a conductor ring may be arranged in the rotating reference frame, as shown by reference number 76.

In some examples, a conductive brush 75 may be employed in addition to or as a replacement for a transmission channel. For instance, the conductive brush 75 may be in electrical contact with one or more of the first power connector 14, the second power connector 16, a conductive element or connector 76A, a conductive element or connector 74A, and/or interface 15, as shown in FIG. 3A. Thus, the conductive brush 75 is configured to maintain contact between the first and second power connectors during rotation of the torch.

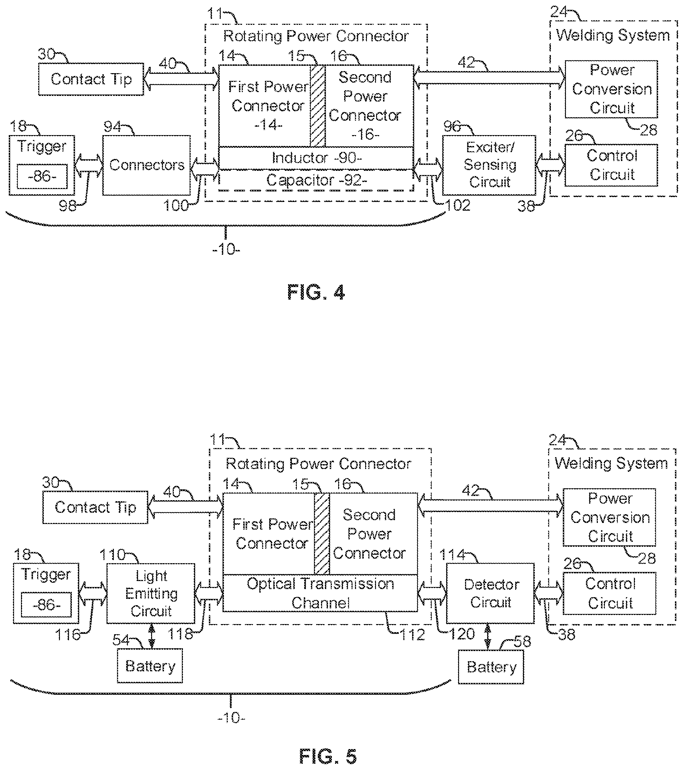

FIG. 4 illustrates another example trigger mechanism 10 employing one or more of an inductive element 90 or a capacitive element 92 to transmit the trigger actuation signal. The elements 90 or 92 may be in addition to or a replacement for a transmission channel. Further, although illustrated together in FIG. 4, each element may be present and employed with or without the other. In the example of FIG. 4, an exciter or conditioning circuit 96 can be employed to generate a current, connected to a first portion of the inductive element 90 and/or the capacitive element 92. In response to actuation of the trigger 18, the actuator 86 is configured to close a circuit by making contact with a second portion of the inductive element 90 and/or the capacitive element 92 (e.g., via a switch, contactor, or relay 94 through optional cables, conduits, interfaces, or media 98 and 100)), thereby modifying a magnetic field (in the inductive element 90) and/or an electric field (in the capacitive element 92) being generated by the exciter circuit 96. Therefore, changes in the magnetic field and/or electric field results from actuation of the trigger 18 and serves as the trigger command signal, which can be received by sensing circuitry of the exciter circuit 96 (or other transceiver, via optional cables, conduits, interfaces, or media 102) and transmitted to the control circuit 26.

In some examples, the inductive element 90 and/or the capacitive element 92 may be one or more layers arranged about the first and second power connectors 14 and 16, and the interface 15 of the rotating power conductor 11. In some examples, the inductive element 90 and/or the capacitive element 92 are arranged to rotate with the rotating power conductor 11, whereas in some examples the inductive element 90 and/or the capacitive element 92 remain stationary during rotation of the rotating power conductor 11. Although both the inductive element 90 and/or the capacitive element 92 are illustrated in the example of FIG. 4, either element may be present while the other is not.

The inductive element 90 and/or capacitive element 92 may consist of multiple layers. In the example employing an inductively coupled mechanism, a generally coaxial transformer traverses the rotating power connector with a primary in the stationary reference frame and a secondary in the rotating reference frame (or vice-versa). By means of mutual coupling between the primary and the secondary transformer elements, which are immune to the rotation of the other transformer element (e.g., arranged inside or outside relative to the other), a signal can be transmitted across this interface by means of their mutual coupling. The dual aspect of this arrangement allows for two separate coaxial 'plates' separated by a thin dielectric material, one in the rotating frame, the other in the stationary frame transmitting a signal by mutual electrostatic coupling.

In some examples, the exciter circuit 96 is configured to additionally or alternatively provide power through the transmission channel to one or more devices in the rotating frame. For example, power may be inductively and/or electrically transmitted through the transmission channel to power a display, an interface, a transceiver, to charge a battery, as a list of non-limiting examples.

FIG. 5 illustrates another example trigger mechanism 10 employing an optical emitter 110 and optical detector 114 to transmit an optical signal through an optical transmission channel 112. For example, actuator 86 activates a light emitting circuit 110 (e.g., a light emitting diode (LED)) arranged to output an optical signal in one or more wavelengths. The optical detector 114 receives the optical signal indicting a trigger command signal, which is transmitted to the control circuit 26.

In some examples, the optical transmission channel 112 is arranged as one or more layers about the first and second power connectors 14 and 16, and the interface 15 of the rotating power conductor 11. In some examples, the optical transmission channel 112 can take a generally cylindrical shape, with the light emitting circuit 110 arranged at a given end of the cylinder (e.g., in the rotating frame) and the detector circuit 114 arranged at an opposing end (e.g., in the stationary frame). The light emitting circuit 110 may direct light at any point along the endpoint of the cylinder as the rotating power connector 11 moves relative to the stationary frame and detector circuit 114. The detector circuit 114 receives the light signal at the opposing end, indicating a trigger command signal.

In some examples, the optical transmission channel 112 comprises an optically diffuse material, such that, regardless of the point of entry, the light from the light emitting circuit 110 travels from the given end to the opposite end, and at least partially illuminates the entirety of a surface at the opposing end. In some examples, one or more of physical, electrical, and/or optical signals may be transmitted via one or more optional cables, conduits, interfaces, or media 116, 118, and 120, to facilitate transmission of the trigger command signal.

In some examples, varying trigger inputs from the operator can cause the light emitting circuit 110 to generate the optical signal with different wavelengths or pulses, indicating a different command. For example, holding the trigger 18 down for a predetermined amount of time may cause the light emitting circuit 110 to generate a first optical signal with a first wavelength (e.g., commanding a first action, such as initiating a welding operation), whereas a double-pull on the trigger 18 causes the light emitting circuit 110 to generate a second optical signal with a second wavelength (e.g., commanding a second action, such as changing to a different welding operation).

In some examples, the light emitting circuit 110 and detector circuit 114 are powered by one or more batteries 54 and 58, such that the optical signals corresponding to the trigger command signals are generated, transmitted, and/or received without requiring power from another source (e.g., the welding system 24). In some examples, the optical transmission channel 112 includes a first optical transmission channel interfacing with a second optical transmission channel. In this manner, the first optical transmission channel may rotate within the rotating reference frame, while transmitting optical signals to the second optical transmission channel via the interface (e.g., by direct coupling, via a medium, etc.).

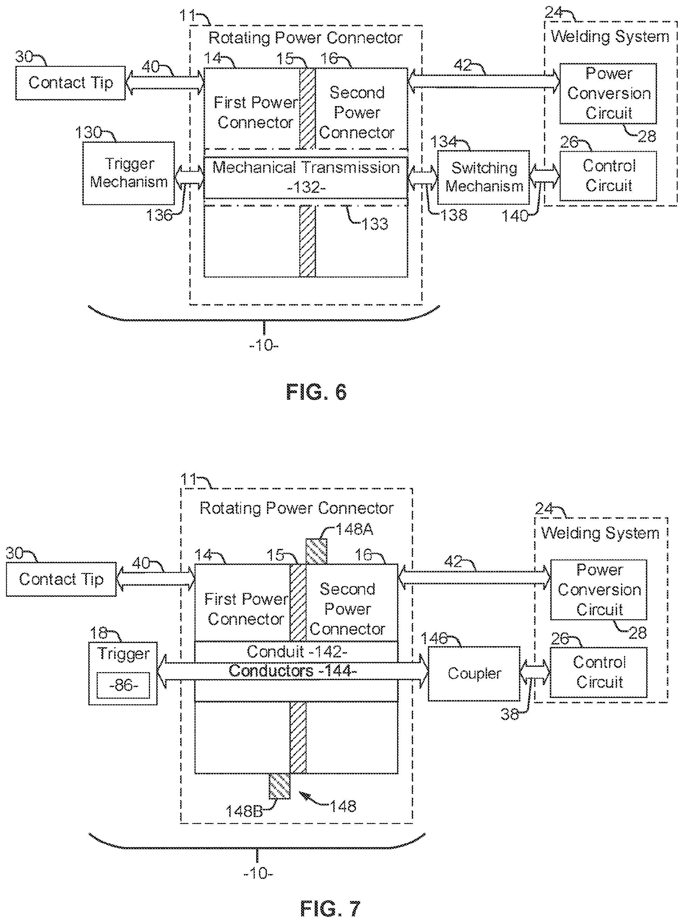

FIG. 6 illustrates another example trigger mechanism 10 employing a mechanical actuator or trigger mechanism 130 and a switching mechanism 134. In the example of FIG. 6, the trigger mechanism 130 may be a standard torch trigger (similar to trigger 18), which is configured to force a mechanical transmission 132 (e.g., a rod, pin, etc.) to translate through a transmission channel 133 (e.g., a coaxial transmission channel) within the rotating power connector 11 in response to the trigger actuation. In some examples, the trigger mechanism 130 includes or is connected to one or more of a switch, a spring, or other actuator which responds to a trigger pull, thereby forcing the mechanical transmission 132 to translate through the transmission channel 133. The translation forces at least a portion of the mechanical transmission 132 to extend from the rotating power connector 11 opposite the trigger mechanism 130, making physical and/or electrical contact with a switching mechanism or other detection circuit 134. In some examples, the switching mechanism 134 includes a transceiver or other type of circuit, and is connected to the control circuit 26 via cable 140.

FIG. 7 illustrates another example trigger mechanism 10 employing a mechanical limiter 148 to limit rotation of the rotating power connector 11 to a predetermined range of radial angles, or to a predetermined number of revolutions. As shown in FIG. 7, one or more conductors 144 connect the trigger 18 with a coupler 146 via a conduit, opening, channel 142 through the rotating power connector 11. To prevent damage to the conductors 144 from excessive twisting, the mechanical limiter 148 is designed to limit the rotational angle and/or number of revolutions of the rotating power connector 11.

The mechanical limiter 148 (e.g., a shaft rotation limiter) includes one or more bumpers 148A and 148B. One or more of the bumpers 148A and 148B may rotate with the rotating frame, while the other bumper may have a fixed position within the stationary frame. In some examples, as the rotating power connector 11 rotates, the bumpers 148A and 148B are configured to make physical contact with each other and/or a fixed rail when the rotating frame rotates up to the predetermined range of radial angles or over the predetermined number of revolutions.

Thus, the conductors 144 (e.g., solid wires, braided wires, litz wires, etc.) are able to twist to a limited degree below which damage would be done to the wires. In some examples, rotating the rotating frame in the opposing direction relative to the stationary frame will serve to undo the twisting of the conductors 144.

This may be realized in hardware, software, or a combination of hardware and software. This may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present trigger mechanism has been described with reference to certain implementations, it will be understood by those skilled in the art that various changes may be made and equivalents may be substituted without departing from the scope of the present invention as defined in the appended claims.

## Claims

1. A trigger mechanism (10) for a semi-automatic welding torch having a rotating power connector (11), the trigger mechanism (10) comprising:
a rotating power connector (11);
a trigger (18) arrangeable at a first location of a torch body and configured to transmit a trigger command signal in response to pressing the trigger (18) on the torch body;
control circuitry (26) to receive the trigger command signal;
a transmission channel (12, 70, 75, 90, 92) to transmit the trigger command signal from the trigger (18) in parallel with the rotating power connector (11) and to the control circuitry (26); and
a conductive element (22, 74, 74A, 96) to electrically couple the transmission channel (12, 70, 75, 90, 92) to the control circuitry (26).

2. The trigger mechanism (10) of claim 1, further comprising a trigger connector (20, 76, 76A, 94) to electrically couple the trigger (18) with the transmission channel (12, 70, 75, 90, 92), the trigger connector (20, 76, 76A, 94) comprising a first set of conductive brushes configured to receive the trigger command signal from the trigger (18), wherein, optionally, the trigger connector (20, 76, 76A, 94) is a ring conductor.

3. The trigger mechanism (10) of claim 2, wherein the conductive element (74) comprises a second set of conductive brushes configured to receive the trigger command signal via the transmission channel (70).

4. The trigger mechanism (10) of claim 3, wherein the first set of conductive brushes are coupled to the transmission channel (70) to transmit the trigger command signal to the second set of conductive brushes, or wherein the first set of conductive brushes are arranged at a first end of the rotating power connecter (11) and the second set of conductive brushes are arranged at a second end of the rotating power connector (11) opposite the first end, or
wherein the first set of conductive brushes and the second set of conductive brushes are electrically isolated from the rotating power connector (11).

5. The trigger mechanism (10) of claim 3, further comprising one or more springs to bias the first set of conductive brushes or the second set of conductive brushes to maintain electrical contact with the transmission channel (70).

6. The trigger mechanism (10) of claim 3, further comprising a transceiver coupled to the second set of conductive brushes, the transceiver configured to transmit the trigger command signal to the control circuitry (26).

7. The trigger mechanism (10) of claim 1, wherein the transmission channel (12) is an electrically conductive conduit.

8. The trigger mechanism (10) of claim 1, wherein the conductive element is a ring conductor.

9. The trigger mechanism (10) of claim 1, wherein
the transmission channel (90, 92) extends through at least part of the rotating power connector (11):
the conductive element (96) comprises an exciter circuit configured to generate a current and apply it to the transmission channel (90, 92); and
the trigger (18) is arrangable at a first end of the rotation power connector (11), the trigger being configured to electrically connect to the transmission channel (90, 92) in response to pressing the trigger (18) thereby generating a trigger command signal.

10. The trigger mechanism (10) of claim 9, wherein the exciter circuit is arranged on a second side of the rotating power connector (11) opposite the trigger actuator (18).

11. The trigger mechanism (10) of claim 9, wherein the transmission channel (90, 92) comprises an inductive coupling (90) configured to modify a magnetic field in response to pressing the trigger (18), the
trigger mechanism (10) optionally further comprising a sensing circuit to measure a change in the magnetic field in response to pressing the trigger (18), wherein the sensing circuit is coupled to control circuitry (26) to control a welding process.

12. The trigger mechanism (10) of claim 9, wherein the transmission channel (92) comprises a capacitive coupling (92) configured to modify an electric field in response to pressing the trigger, the
trigger mechanism (10) optionally further comprising a sensing circuit to measure a change in the electric field in response to the trigger command signal, wherein the sensing circuit is coupled to control circuitry (26) to control a welding process.

13. The trigger mechanism (10) of claim 9 in combination with a semi-automatic welding torch, wherein, in use, the semi-automatic welding torch is manually operated.

14. The trigger mechanism (10) of claim 9 in combination with a semi-automatic welding torch, wherein, in use, the semi-automatic welding torch is operated robotically.

15. The trigger mechanism (10) of claim 1, wherein
the trigger (18) is arrangable at a rotating frame of a torch body, the trigger (18) configured to transmit a trigger command signal in response to pressing the trigger (18); and
the control circuitry (26) is arrangable at a stationary frame relative to the rotating frame, the control circuitry (26) to receive the trigger command signal.

## Patentansprüche

1. Auslösemechanismus (10) für einen halbautomatischen Schweißbrenner mit einem rotierenden Leistungsverbinder (11), wobei der Auslösemechanismus (10) aufweist:
einen rotierenden Leistungsverbinder (11);
einen Auslöser (18), der an einem ersten Ort eines Brennerkörpers anordenbar und so konfiguriert ist, dass er ein Auslösebefehlssignal als Reaktion auf das Drücken des Auslösers (18) auf dem Brennerkörper überträgt;
eine Steuerschaltung (26) zum Empfangen des Auslösebefehlssignals;
einen Übertragungskanal (12, 70, 75, 90, 92), um das Auslösebefehlssignal von dem Auslöser (18) parallel zu dem rotierenden Leistungsverbinder (11) und zu der Steuerschaltung (26) zu übertragen; und
ein leitendes Element (22, 74, 74A, 96), um den Übertragungskanal (12, 70, 75, 90, 92) mit der Steuerschaltung (26) elektrisch zu koppeln.

2. Auslösemechanismus (10) nach Anspruch 1, der ferner einen Auslöseverbinder (20, 76, 76A, 94) aufweist, um den Auslöser (18) mit dem Übertragungskanal (12, 70, 75, 90, 92) elektrisch zu koppeln, wobei der Auslöseverbinder (20, 76, 76A, 94) einen ersten Satz von leitenden Bürsten aufweist, die konfiguriert sind, um das Auslösebefehlssignal von dem Auslöser (18) zu empfangen, wobei der Auslöseverbinder (20, 76, 76A, 94) optional ein Ringleiter ist.

3. Auslösemechanismus (10) nach Anspruch 2, wobei das leitende Element (74) einen zweiten Satz von leitenden Bürsten aufweist, die konfiguriert sind, um das Auslösebefehlssignal über den Übertragungskanal (70) zu empfangen.

4. Auslösemechanismus (10) nach Anspruch 3, wobei der erste Satz von leitenden Bürsten mit dem Übertragungskanal (70) gekoppelt ist, um das Auslösebefehlssignal zu dem zweiten Satz von leitenden Bürsten zu übertragen, oder wobei der erste Satz von leitenden Bürsten an einem ersten Ende des rotierenden Leistungsverbinders (11) angeordnet ist und der zweite Satz von leitenden Bürsten an einem zweiten Ende des rotierenden Leistungsverbinders (11) gegenüber dem ersten Ende angeordnet ist, oder
wobei der erste Satz von leitenden Bürsten und der zweite Satz von leitenden Bürsten elektrisch von dem rotierenden Leistungsverbinder (11) isoliert sind.

5. Auslösemechanismus (10) nach Anspruch 3, der ferner eine oder mehrere Federn aufweist, um den ersten Satz von leitenden Bürsten oder den zweiten Satz von leitenden Bürsten vorzuspannen, um elektrischen Kontakt mit dem Übertragungskanal (70) aufrechtzuerhalten.

6. Auslösemechanismus (10) nach Anspruch 3, der ferner einen Sendeempfänger aufweist, der mit dem zweiten Satz von leitenden Bürsten gekoppelt ist, wobei der Sendeempfänger so konfiguriert ist, dass er das Auslösebefehlssignal an die Steuerschaltung (26) überträgt.

7. Auslösemechanismus (10) nach Anspruch 1, wobei der Übertragungskanal (12) eine elektrisch leitende Leitung ist.

8. Auslösemechanismus (10) nach Anspruch 1, wobei das leitende Element ein Ringleiter ist.

9. Auslösemechanismus (10) nach Anspruch 1, wobei
der Übertragungskanal (90, 92) sich durch mindestens einen Teil des rotierenden Leistungsverbinders (11) erstreckt:
das leitende Element (96) eine Erregerschaltung aufweist, die konfiguriert ist, um einen Strom zu erzeugen und ihn an den Übertragungskanal (90, 92) anzulegen; und
der Auslöser (18) an einem ersten Ende des rotierenden Leistungsverbinders (11) anordenbar ist, wobei der Auslöser so konfiguriert ist, dass er als Reaktion auf das Drücken des Auslösers (18) elektrisch mit dem Übertragungskanal (90, 92) verbunden wird, wodurch ein Auslösebefehlssignal erzeugt wird.

10. Auslösemechanismus (10) nach Anspruch 9, wobei die Erregerschaltung auf einer zweiten Seite des rotierenden Leistungsverbinders (11) gegenüber dem Auslösebetätiger (18) angeordnet ist.

11. Auslösemechanismus (10) nach Anspruch 9, wobei der Übertragungskanal (90, 92) eine induktive Kopplung (90) aufweist, die so konfiguriert ist, dass sie ein Magnetfeld als Reaktion auf das Drücken des Auslösers (18) modifiziert,
wobei der Auslösemechanismus (10) optional ferner eine Erfassungsschaltung aufweist, um eine Änderung des Magnetfelds als Reaktion auf das Drücken des Auslösers (18) zu messen, wobei die Erfassungsschaltung mit der Steuerschaltung (26) gekoppelt ist, um einen Schweißprozess zu steuern.

12. Auslösemechanismus (10) nach Anspruch 9, wobei der Übertragungskanal (92) eine kapazitive Kopplung (92) aufweist, die konfiguriert ist, um ein elektrisches Feld als Reaktion auf das Drücken des Auslösers zu modifizieren,
wobei der Auslösemechanismus (10) optional ferner eine Erfassungsschaltung aufweist, um eine Änderung des elektrischen Felds als Reaktion auf das Auslösebefehlssignal zu messen, wobei die Erfassungsschaltung mit der Steuerschaltung (26) gekoppelt ist, um einen Schweißprozess zu steuern.

13. Auslösemechanismus (10) nach Anspruch 9 in Kombination mit einem halbautomatischen Schweißbrenner, wobei der halbautomatische Schweißbrenner manuell betätigt wird.

14. Auslösemechanismus (10) nach Anspruch 9 in Kombination mit einem halbautomatischen Schweißbrenner, wobei der halbautomatische Schweißbrenner robotisch betätigt wird.

15. Auslösemechanismus (10) nach Anspruch 1, wobei
der Auslöser (18) an einem Drehrahmen eines Brennerkörpers anordenbar ist, wobei der Auslöser (18) so konfiguriert ist, dass er ein Auslösebefehlssignal als Reaktion auf das Drücken des Auslösers (18) überträgt; und
die Steuerschaltung (26) an einem stationären Rahmen relativ zu dem Drehrahmen anordenbar ist, wobei die Steuerschaltung (26) das Auslösebefehlssignal empfängt.

## Revendications

1. Mécanisme de gâchette (10) pour un chalumeau de soudage semi-automatique ayant un raccord d'alimentation rotatif (11), le mécanisme de gâchette (10) comprenant :
un raccord d'alimentation rotatif (11) ;
une gâchette (18) pouvant être agencée au niveau d'un premier emplacement d'un corps de chalumeau et configurée pour transmettre un signal de commande de gâchette en réponse à l'appui de la gâchette (18) sur le corps de chalumeau ;
une circuiterie de commande (26) pour recevoir le signal de commande de gâchette ;
un canal de transmission (12, 70, 75, 90, 92) pour transmettre le signal de commande de gâchette depuis la gâchette (18) en parallèle avec le raccord d'alimentation rotatif (11) et à la circuiterie de commande (26) ; et
un élément conducteur (22, 74, 74A, 96) pour coupler électriquement le canal de transmission (12, 70, 75, 90, 92) à la circuiterie de commande (26).

2. Mécanisme de gâchette (10) selon la revendication 1, comprenant en outre un raccord de gâchette (20, 76, 76A, 94) pour coupler électriquement la gâchette (18) au canal de transmission (12, 70, 75, 90, 92), le raccord de gâchette (20, 76, 76A, 94) comprenant un premier ensemble de balais conducteurs configurés pour recevoir le signal de commande de gâchette provenant de la gâchette (18), dans lequel, facultativement, le raccord de gâchette (20, 76, 76A, 94) est un conducteur annulaire.

3. Mécanisme de gâchette (10) selon la revendication 2, dans lequel l'élément conducteur (74) comprend un deuxième ensemble de balais conducteurs configurés pour recevoir le signal de commande de gâchette par l'intermédiaire du canal de transmission (70).

4. Mécanisme de gâchette (10) selon la revendication 3, dans lequel le premier ensemble de balais conducteurs est couplé au canal de transmission (70) pour transmettre le signal de commande de gâchette au deuxième ensemble de balais conducteurs, ou dans lequel le premier ensemble de balais conducteurs est agencé au niveau d'une première extrémité du raccord d'alimentation rotatif (11) et le deuxième ensemble de balais conducteurs est agencé au niveau d'une deuxième extrémité du raccord d'alimentation rotatif (11) opposée à la première extrémité, ou
dans lequel le premier ensemble de balais conducteurs et le deuxième ensemble de balais conducteurs sont isolés électriquement du raccord d'alimentation rotatif (11).

5. Mécanisme de gâchette (10) selon la revendication 3, comprenant en outre un ou plusieurs ressorts pour solliciter le premier ensemble de balais conducteurs ou le deuxième ensemble de balais conducteurs afin de maintenir un contact électrique avec le canal de transmission (70).

6. Mécanisme de gâchette (10) selon la revendication 3, comprenant en outre un émetteur-récepteur couplé au deuxième ensemble de balais conducteurs, l'émetteur-récepteur étant configuré pour transmettre le signal de commande de gâchette à la circuiterie de commande (26).

7. Mécanisme de gâchette (10) selon la revendication 1, dans lequel le canal de transmission (12) est un conduit électroconducteur.

8. Mécanisme de gâchette (10) selon la revendication 1, dans lequel l'élément conducteur est un conducteur annulaire.

9. Mécanisme de gâchette (10) selon la revendication 1, dans lequel
le canal de transmission (90, 92) s'étend à travers au moins une partie du raccord d'alimentation rotatif (11) :
l'élément conducteur (96) comprend un circuit d'excitation configuré pour générer un courant et l'appliquer au canal de transmission (90, 92) ; et
la gâchette (18) peut être agencée au niveau d'une première extrémité du raccord d'alimentation de rotation (11), la gâchette étant configurée pour se raccorder électriquement au canal de transmission (90, 92) en réponse à l'appui sur la gâchette (18) générant ainsi un signal de commande de gâchette.

10. Mécanisme de gâchette (10) selon la revendication 9, dans lequel le circuit d'excitation est agencé sur un deuxième côté du raccord d'alimentation rotatif (11) opposé à l'actionneur de gâchette (18).

11. Mécanisme de gâchette (10) selon la revendication 9, dans lequel le canal de transmission (90, 92) comprend un couplage inductif (90) configuré pour modifier un champ magnétique en réponse à l'appui sur la gâchette (18),
le mécanisme de gâchette (10) comprend en outre facultativement un circuit de détection pour mesurer un changement dans le champ magnétique en réponse à l'appui sur la gâchette (18), dans lequel le circuit de détection est couplé à une circuiterie de commande (26) pour commander un processus de soudage.

12. Mécanisme de gâchette (10) selon la revendication 9, dans lequel le canal de transmission (92) comprend un couplage capacitif (92) configuré pour modifier un champ électrique en réponse à l'appui sur la gâchette,
le mécanisme de gâchette (10) comprend en outre facultativement un circuit de détection pour mesurer un changement dans le champ électrique en réponse au signal de commande de gâchette, dans lequel le circuit de détection est couplé à une circuiterie de commande (26) pour commander un processus de soudage.

13. Mécanisme de gâchette (10) selon la revendication 9, en combinaison avec un chalumeau de soudage semi-automatique, dans lequel, en utilisation, le chalumeau de soudage semi-automatique est mis en fonctionnement manuellement.

14. Mécanisme de gâchette (10) selon la revendication 9, en combinaison avec un chalumeau de soudage semi-automatique, dans lequel, en utilisation, le chalumeau de soudage semi-automatique est mis en fonctionnement de manière robotisée.

15. Mécanisme de gâchette (10) selon la revendication 1, dans lequel
la gâchette (18) peut être agencée au niveau d'un cadre rotatif d'un corps de chalumeau, la gâchette (18) étant configurée pour transmettre un signal de commande de gâchette en réponse à l'appui sur la gâchette (18) ; et
la circuiterie de commande (26) peut être agencée au niveau d'un cadre fixe par rapport au cadre rotatif, la circuiterie de commande (26) recevant le signal de commande de gâchette.
